Europäisches Patentamt

European Patent Office

Office européen des brevets

(19)

(11) Numéro de publication: **0 273 795**
**A2**

(12)

# DEMANDE DE BREVET EUROPEEN

(21) Numéro de dépôt: **87402684.2**

(22) Date de dépôt: **26.11.87**

(51) Int. Cl.4: **C 08 F 8/00**
**C 08 F 8/14**

(30) Priorité: **27.11.86 FR 8616547**

(43) Date de publication de la demande:
**06.07.88 Bulletin 88/27**

(84) Etats contractants désignés:
**AT BE CH DE ES GB GR IT LI LU NL SE**

(71) Demandeur: **Société Chimique des Charbonnages S.A.**
**Tour Aurore Place des Reflets**
**F-92080 Paris La Défense 2 Cédex 5 (FR)**

(72) Inventeur: **Cassiani, Serge**
**1, place des Marchands Laboureurs**
**F-95120 Ermont (FR)**

**Fourquier, Dominique**
**38, rue des Veneurs**
**F-60160 La Croix St Ouen (DE)**

**Gregrorik, Eva**
**43, rue du Maréchal Gérard**
**F-60870 Villers St Paul (FR)**

**Nocq, Dany**
**30, grande rue**
**F-60130 Fournival (FR)**

**Boutevin, Bernard**
**1, rue Mathieu**
**F-34100 Montpellier (FR)**

**Parisi, Jean-Pierre**
**11, hameau des Guilhèmes**
**F-34000 Montpellier (FR)**

(74) Mandataire: **Rieux, Michel**
**SOCIETE CHIMIQUE DES CHARBONNAGES S.A. Service**
**Propriété Industrielle Tour Aurore Place des Reflets**
**Cédex no. 5**
**F-92080 Paris la Défense 2 (FR)**

(54) **Nouvelles compositions de résines polyacryliques insaturées.**

(57) Nouvelles compositions obtenues par réaction de copolymères carboxylés ou époxydés sur du (méth)acrylate de glycidyle ou de l'acide lique, les copolymères carboxylés étant fabriqués à partir d'acide (méth)acrylique et de monomères (méth)acryliques dépourvus de groupes réactifs, les copolymères époxydés étant fabriqués à partir de méthacrylate de glycidyle et des monomères (méth)acryliques dépourvus du groupes réactifs.

Application à la fabrication de matériaux chargés ou renforcés.

EP 0 273 795 A2

Bundesdruckerei Berlin

## Description

### NOUVELLES COMPOSITIONS DE RESINES POLYACRYLIQUES INSATUREES

La présente invention concerne de nouvelles compositions de résines thermodurcissables. Elle a plus particulièrement pour objet de nouvelles compositions de résines polyacryliques insaturées.

Les résines polyesters insaturées sont les résines thermodurcissables qui sont actuellement les plus utilisées dans la technique de fabrication des matériaux composites, c'est à dire dans la fabrication de matériaux mettant en oeuvre des résines et des matériaux de renfort fibres de verre en particulier. Malheureusement l'utilisation de ces résines polyesters pour la fabrication de matériaux composites est assez limitée à cause des matières premières mises en oeuvre qui sont essentiellement constituées par l'anhydride maléïque ou phtalique. de diol et d'un diluant choisi le plus souvent parmi le styrène. Par ailleurs, un problème important que l'on rencontre avec les polyesters est que par suite de leur réactivité médiocre, ils nécessitent, lorsqu'on les met en oeuvre dans les techniques de moulage, des temps de moulage élevés associés à des pressions de moulage particulièrement importantes. Le besoin se fait donc sentir de mettre au point de nouvelles générations de résines thermodurcissables qui ne présentent pas ces inconvénients.

On a déjà proposé (voir en particulier le brevet européen 64809) des résines acryliques issues de l'addition d'un polyisocyanate sur un monomère acrylique hydroxylé mis en solution dans du méthacrylate de méthyle. Malheureusement la mise en oeuvre de ces résines conduit à des produits finis qui posent des problèmes lors de leur mise en peinture par suite de la formation de pores en surface. Par ailleurs, la fabrication de ces résines nécessite la manipulation de produits toxiques et la présence de polyisocyanate est responsable d'un vieillissement médiocre ainsi qu'une coloration des produits finis. De plus, on constate que la mise en fabrication de ces résines conduit à des résultats peu reproductibles. Enfin, il faut noter le dégagement d'acide cyanhydrique lors des tests au feu des produits finis.

Ces résines sont mises en oeuvre de façon connue en additionnant à la résine un système constitué d'un accélérateur tel que le diméthylparatoluidine et de peroxyde de benzoyle : la mise en oeuvre de ce système permet de réaliser le durcissement de ces résines. De façon connue le peroxyde de benzoyle se présente sous la forme d'un poudre ou d'une émulsion organique.

La présente invention concerne de nouvelles compositions de résines acryliques susceptibles d'être durcies à l'aide de catalyseurs solides ou en émulsion caractérisées en ce que ces résines sont obtenues par réaction de copolymères carboxylés ou époxydés sur soit du (méth)acrylate de glycidyle lorsque le copolymère est carboxylé, soit de l'acide(méth)acrylique lorsque le copolymère est époxydé, la résine insaturée ainsi obtenue étant mise en solution dans un diluant réactif, les copolymères carboxylés ou époxydés étant obtenus par voie radicalaire en faisant réagir, pour obtenir le copolymère carboxylé, de l'acide (méth)acrylique, des monomères (méth)acryliques dépourvus de groupes réactifs choisis parmi les (méth)acryliques d'alcoyle, des agents de transfert de chaine et un initiateur azoïque ou péroxydé, et en faisant réagir, pour obtenir le copolymère époxydé , du (méth)acrylate de glycidyle, des monomères (méth)acryliques dépourvus de groupes réactifs choisi parmi les (méth)acrylates d'alcoyle, des agents de transfert de chaîne, et un initiateur azoïque ou un péroxyde.

Les résines obtenues selon l'invention sont particulièrement réactives, ce qui permet en plus des techniques traditionnelles de mise en oeuvre (coulée, stratification manuelle...) de les utiliser dans les techniques de moulage à la presse ou par injection à température peu élevée, c'est-à-dire inférieure à 50°C et dans toutes autres techniques nécessitant des cycles de moulage accélérés et des températures et des pressions peu élevées. Il va de soi que ces techniques peuvent aussi être mises en oeuvre à des températures supérieures à 50°C.

Les résines selon l'invention sont obtenues par réaction de copolymères carboxylés ou époxydés sur soit du (méth)acrylate de glycidyle lorsque le copolymère est carboxylé, soit de l'acide (méth)acrylique lorsque le copolymère est époxydé : ces monomères sont mise en oeuvre en quantité stoechiométrique calculée sur le nombre de fonctions carboxyle ou époxyde, le nombre de ces fonctions étant déterminé par la mesure des indices d'acide ou d'époxyde. Cette réaction est effectuée entre 80 et 120°C dans un solvant non réactif qui solubilise la résine et qui est choisi parmi les cétones ou les esters en particulier.

La résine insaturée ainsi obtenue est mise en solution dans un diluant réactif choisi de préférence parmi un (méth)acrylate d'alcoyle par exemple, le (méth)acrylate de méthyle utilise en quantité comprise entre 10 et 90 % en poids et de préférence entre 30 et 70 % en poids par rapport au poids total de la résine. A côté du diluant réactif, il est possible d'ajouter d'autres comonomères comme le styrène, l'acétate de vinyle ou d'autres monomères polyfunctionnels acryliques, comme par exemple le di(méth)acrylate d'éthylène glycol, le triacrylate de triméhylolpropane, ou des diacryles de glycidyléther du bisphénol A. Cette réaction est réalisée de façon connue éventuellement en présence d'inhibiteur de polymérisation tel que l'hydroquinone.

Les copolymères carboxylés ou époxydés mis en oeuvre pour l'obtention des résines acryliques selon l'invention sont obtenus pour le copolymère carboxylé en faisant réagir par voie radicalaire 5 à 40 % en poids d'acide (méth)acrylique, 4 à 92 % en poids de monomères (méth)acryliques dépourvus de groupes réactifs choisis parmi les (méth)acrylates d'alcoyle, 2 à 50 % en poids d'agent de transfert de chaîne et 1 à 5 % en poids d'initiateur azoïque ou péroxydé, le copolymère époxydé est obtenu en faisant réagir 10 à 50 % en poids de (méth)acrylate de glycidyle, 10 à 87 % en poids de monomères acryliques dépourvus de groupes réactifs, 2 à 40 % en poids d'agent de transfert de chaîne et 1 à 5 % en poids d'initiateur azoïque ou péroxydé. Les monomères acryliques dépourvus de groupes réactifs sont choisis parmi les monomères alcoylés par exemple l'acrylate de méthyle, de butyle, d'éthyl-hexyle et les méthacryllates correspondant, les agents de transfert de chaîne étant choisis parmis l'éthyl, le tertiononyl ou le n-octyl mercaptan, le n-dodecyl mercaptan, l'acide thioglycolique, le marcapto-éthanol, le méthyl mercaptan, le diester de l'éthylène glycol et de l'acide thioglycolique. La réaction des copolymères carboxylés ou époxydés sur les réactifs précités est réalisées en masse ou dans un solvant : dans ce cas, ce dernier est éliminié à n'importe quelle étape de la préparation des résines selon l'invention.

Les nouvelles compositions de résines acryliques selon l'invention sont durcies de façon connue en additionnant à la résine un système constitué d'un accélérateur tel que la diméthylparatoluidine et de peroxyde de benzoyle. De façon connue comme le peroxyde de benzoyle se présente sous la forme d'un poudre ou d'une émulsion organique. Or, dans certaines applications industrielles nécessitant la mise en oeuvre de pompes pour l'acheminement du système : accélérateur - peroxyde on constate que l'émulsion est rompue par les pompes ce qui provoque une précipitation et un bouchage des pompes. On a donc intérêt pour ces applications de disposer d'un système catalytique qui ne présente pas ces inconvénients.

Selon une seconde caractéristique l'invention concerne un nouveau procédé de durcissement, des résines acryliques objet de l'invention.

La présente invention concerne également un nouveau procédé de durcissement de résines polyacryliques susceptibles d'être durcies à l'aide de catalyseurs caractérisé en ce que le durcissement des résines polyacryliques est réalisé à l'aide d'un système catalytique constitué d'un peroxyde organique liquide, d'une amine aromatique et d'au moins un accélérateur.

On a trouvé que la mise en oeuvre d'un tel système et en particulier d'un péroxyde organique sous forme liquide ne posait plus de problèmes lors de l'acheminement de péroxyde à l'aide de pompes. Par ailleurs, l'utilisation d'un tel système permet d'obtenir des produits finis ne contenant pratiquement plus de monomères résiduel.

Selon une seconde caractéristique de l'invention, le durcissement des résines polyacryliques est réalisé à l'aide d'un système catalytique constitué d'un péroxyde organique liquide, d'un amine aromatique et d'au moins un accélérateur. Le péroxyde organique est choisi parmi l'hydropéroxyde de cumène, l'hydropéroxyde de tertiobutyl, l'hydropéroxyde de di-isopropyl benzéne ou parmi les péroxydes de cétones aliphatiques ou cycloaliphatiques en particulier péroxyde de méthyl-éthyl cétone, péroxyde de cyclohexanone, péroxyde de méthylisobutylcétone ou encore parmi les peresters en particulier le péroxyde d'éthyl-2 hexanoate de t-butyle. Ces péroxydes sont utilisés à raison de 0,2 à 2 % en poids par rapport au poids de la résine pure. Les amines aromatiques qui conviennent pour la mise en oeuvre du procédé de l'invention sont choisies parmi la diméthyl para-toluidine, le di-méthyl aniline, la di-éthyl aniline et de façon plus générale parmi les amines aromatiques tertiaires : les quantités mises en oeuvres sont comprises entre 0,1 et 2 % en poids par rapport au poids de la résine pure. Selon le procédé objet de l'invention le durcissement est réalisé en utilisant un système catalytique constitué d'au moins un accélérateur choisi parmi l'actoate de cobalt, le naphténate de cobalt, l'éthylhexanoate de cobalt, ou le produit de la réaction du pentoxyde de vanadium avec le monobutyl phosphite ou encore parmi l'acétyl-acétone. Lorsque l'accélarateur est choisi parmi un sel de vanadium, la quantité mise en oeuvre est comprise entre 5 et 40 p.p.m. exprimée en quantité de vanadium métal par rapport au poids de la résine, enfin lorsque l'accélérateur choisi est l'acétyl-acétone, la quantité utlisée et comprise entre 0,1 à 1 % exprimée en poids par rapport au poids de la résine pure.

De façon avantageuse le nouveau procédé de l'invention est mis en oeuvre en utilisant les systèmes catalytiques associés de la manière suivante :
- un hydropéroxyde liquide avec la di-méthyl paratoluidine et le produit de la réaction du pentoxyde de vanadium avec le monobutyl phosphite,
- un hydropéroxyde liquide ou un péroxyde de cétone liquide avec la di-méthyl para-toluidine et l'ocatoate de cobalt,
- un péroxyde d'éthyl 2-héxanoate de t-butyle liquide avec la diméthyl para-toluidine et le couple d'accélérateurs constitué d'octoate de cobalt et d'acéthyl-acétone.

Selon la procédé l'invention les systèmes catalytiques sont mis en oeuvre de la façon suivante : on additionne à la résine les charges éventuelles, l'amine aromatique, le péroxyde liquide et éventuellement l'accélérateur lorsque ce n'est pas un composé métallique. Au moment de l'injection l'accélérateur métallique est ajouté au mélange. Une telle mise en oeuvre permet d'obtenir des mélanges de résines stables.

Les résines polyacrylates insaturées selon l'invention ont des masses moéculaires faibles comprises entre 400 et 400 et de préférence entre 800 et 2000. Ce sont des résines très fluides (viscosité de 0,01 Pa.s à 0,5 Pa.s à 50 % d'extrait sec déterminé selon la norme NFT 30011) de ce fait elles conviennent particulièrement pour la fabrication de matériaux chargés ou renforcés. Les renforts utilisés étant constitués de manière connue par des fibres de verre, les charges étant choisies parmi le mica, la silice, le carbonate de calcium, le talc, la vermiculite....

Les exemples suivants illustrent la présente invention, les quantités sont exprimées en parties en poids.

## EXEMPLE 1

Dans un réacteur muni d'un agitateur, d'un thermomètre, d'un dispositif de distillation sous vide, de deux ampoules d'introduction de réactifs et d'un appareillage de chauffage, on introduit 65 parties de solvant constitué de méthylisobutylcétone. On chauffe le solvant a 100°C. On charge dans une ampoule d'introduction de réactifs, 13 parties d'agent de transfert constitué d'acide thioglycolique et on introduit dans l'autre ampoule d'introduction de réactifs 3,5 parties d'azobisisobutylonotrile coome catalyseur, dissous dans 13 parties d'acide méthacrylique et 74 parties de méthacrylate de méthyle. Les réactifs sont coulés en continu dans le réacteur en maintenant constant le rapport acide thioglycolique/monomères. la coulée est réalisée en 1 heure à 100°C. On maintient ensuite le milieu réactionnel à cette température pendant 1 heure, et on contrôle le rendement de polymérisation par détermination de l'extrait sec ce qui permet d'évaluer la quantité des produits volatifs.

Le solvant est ensuite éliminé en chauffant le mileu réactionnel jusque vers 140°C d'abord en distillant sous pression normale puis sous une pression de 0,1 bar. Après élimination totale du solvant, on refroidit à 100°C puis on ajoute 200ppm d'hydroquinone comme inhibiteur de polymérisation.On obtient 103 parties de copolymère carboxylé.

On charge ensuite dans une ampoule d'introduction de réactifs 41 parties de méthacrylate de glycidyle qui est ensuite coulé dans le réacteur en 30 minutes en maintenant la température de ce dernier à 105°C. On obtient 140 parties de résine qui présente un indice d'acide de 21, un indice d'époxyde de 0,54 et une masse moléculaire Mn de 480 déterminé selon la norme NFT 62104, l'indice d'époxy selon la norme NFT 51522. La résine obtenue est mise ensuite en solution dans un diluant réactif constitué de méthacrylate de méthyl à a raison de 50 % en poids : l'extrait sec est alors de 50%, la viscosité de la résine en solution est à 20°C de 0,08Pa.s.

On détermine sur la résine obtenue sa réactivité à 20°C en ajoutant à 30 grammes de résine accélérée par 0,3 % de diméthylparatolnidine 1,5 % de peroxyde de benzoyle. Sur ce mélange on détermine le temps nécessaire au gel, puis le temps nécessaire à sa copolymérisation et sa température (définis par un pic) : quand la température commence à descendre, la réaction de copolymérisation est terminée.

Les caractéristiques obtenues sont les suivantes :
- temps de gel (minutes)........ 6
- temps de pic (minutes)........ 9,5
- température de pic (°C)........ 120
- écart gel-pic (minutes)........ 3,5

EXEMPLE 2

L'exemple 1 est répété en mettant en oeuvre les réactifs suivants :

| | |
|---|---|
| – acide méthacrylique ............. | 15 parties |
| – méthacrylate de méthyle......... | 75 parties |
| – dodecyl mercaptan au lieu d'acide thioglycolique comme agent de transfert............... | 10 parties |
| – catalyseur : perbenzoate de tertio-butyl.......................... | 4 parties |
| – solvant : acétate d'éthyle glycol | 65 parties |
| – température de réaction......... | 104°C |

On obtient après réaction et évaporation du solvant 103 parties de copolymère carboxylé.

Ce copolymère est ensuite mis à réagir avec 25 parties de méthacrylate de glycidyle. La résine obtenue présente un indice d'acide de 12 et un indice d'époxyde de 0,147. Son poids moléculaire Mn est de 1800 Elle est ensuite mise en solution dans 50 parties de méthacrylate de méthyl : sa viscosité à 20°C est de 0,08 Pa.s.

Sa réactivité déterminée comme dans l'exemple 1 est la suivante :
- temps de gel (minutes)..........16,5
- temps de pic (minutes).......... 22,5
- température de pic (°C)......... 6
- écart gel-pic (minutes)......... 6

Les propriétés mécaniques de la résine pure sont résumées dans le tableau annexé.

EXEMPLE 3

L'exemple 1 est répété en mettant en oeuvre les réactifs suivants pour la fabrication de la résine carboxylée :

- acide méthacrylique .......... 25 parties
- méthacrylate de méthyle........ 65 parties

- acide thioglycolique........... 10 parties

Après obtention du copolymère carboxylé, on prépare la résine en ajoutant 57 parties de méthacrylate de glycide et en mettant en oeuvre 0.5 % de triéthylamine. On obtient alors une résine qui présente un indice d'acide de 0,6, un indice d'époxyde de 0,239 et un poids moléculaire de 1300. Mise en solution dans 50 parties de méthacrylate de méthyle, la résine présente les caractéristiques suivantes :
- extrait sec (%)..................... 50
- viscosité a 20°C.................... 0,130Pa.s
- temps de gel (minutes).............. 2,1
- temps de pic (minutes).............. 4,8
- température de pic (°C).............132
- écart gel-pic (minutes)............. 2,7

Les propriétés mécaniques de la résine pure et de la résine chargée sont résumées dans le tableau annexé.

Exemple 4

L'exemple 1 est répété mais en mettant en oeuvre les réactifs suivants, pour la fabrication de la résine carboxylée :
- 31 parties d'acide acrylique au lieu de 13 parties d'acide méthacrylique,
- 45 parties de méthacrylate de méthyle
- 24 parties de dodecyl mercaptan au lieu de 13 parties d'acide thioglycolique.

La réaction est réalisée avec le même catalyseur et le même solvant que ceux utilisés dans l'exemple 1. Après élimination du solvant, on obtient 105 parties de résine carboxylée.

On fait ensuite réagir sur cette résine 54 parties de méthacrylate de glycide en présence de 0,8 % en poids de triéthylamine dans les conditions opératoires de l'exemple 1. On obtient une résine qui présente un indice d'acide de 21 et un indice d'époxyde de 0,43, son poids moléculaire Mm est de 1200. Mise en solution dans du méthacrytlate de méthyle à raison d'un quantité égale à 52 % en poids, la résine obtenue présente les caractéristiques suivantes :
- extrait sec (%)..................... 48
- viscosité a 20°C.................... 0,02 Pa.s
- temps de gel (minutes).............. 4,7
- temps de pic (minutes).............. 8,5
- température de pic (°C)............ 89
- écart gel-pic (minutes)............. 3,8

Les propriétés mécaniques des résines pures sont déterminées par coulée de la résine catalysée et accélérée comme décrit ci-dessus entre deux plaques de verre calées par un joint qui assure une épaisseur de 3 millimètres.

Sur les éprouvettes réalisées, on mesure les propriétés indiquées dans le tableau annexé. On utilise un appareil INSTRON pour déterminer la traction (150. R 527) et la flexion (150. R 178), le choc CHARPY est déterminé selon la norme ISCR 179, le module en traction compression est déterminé avec un appareil METRAVIB selon une norme interne. Les propriétés mécaniques de la résine armée et chargée sont indiquées dans le tableau annexé 1. Elles sont réalisées selon les mêmes normes que ci-dessus avec une composition contenant pour 100 parties de résine 160 parties de carbonate de calcium et 45 parties de fibres de verre.

TABLEAU 1

| Résine utilisée | Exemple 2 | Exemple 3 | Exemple 4 |
|---|---|---|---|
| Propriétés mécaniques de la résine pure | | | |
| à 23°C | | | |
| TRACTION : Allongement (%) | | 1,1 | 4,7 |
| Contrainte (MPa) | | 30 | 49 |
| Module (MPa) | | 2820 | 2160 |
| FLEXION : Flèche (%) | | 5 | 8 |
| Contrainte (MPa) | | 101 | 80 |
| Module (MPa) | | 3290 | 2390 |
| CHOC CHARPY (Kj/m3) | | 92 | 165 |
| Traction/Compression-Module (MPa) | 3400 | 4000 | 2700 |
| à 23°C | | | |
| Traction /Compression-Module (MPa) | 85 | 500 | 70 |
| % Module Résiduaire/23°C | 2,5 | 12,5 | 3 |
| Propriétés mécaniques de la résine chargée | | | |
| à 23°C | | | |
| FLEXION : Flèche (%) | | 2,9 | 3,7 |
| Contrainte (MPa) | | 159 | 153 |
| Module (MPa) | | 12070 | 9780 |
| Traction/Compression -Module (MPa) | | 11000 | 8300 |
| à 110°C | | | |
| FLEXION : Flèche (MPa) | | | 2,6 |
| Contrainte (MPa) | | | 2,9 |
| Module (MPa) | | | 1562 |
| Traction/Compression-Module (MPa) | | 5800 | 2800 |

EXEMPLE 5

On met en oeuvre la résine fabriquée dans l'exemple 1.

Le tableau 1 suivant indique la réactivité de la résine déterminée à 40°C en utilisant un système catalytique constitué de di-méthyl-para-toluidine, d'hydropéroxyde de cumène liquide et du produit de la réaction du pentoxyde de vanadium avec le monobutyl phosphite : ces composés sont utilisés en quantités variables.

Le Tableau 2 indique la réactivité de la résine déterminée en analyse enthalpique différentielle : DSC-2 PERKIN ELMER (procédé d'analyse dynamique en programmation linéaire de température à 10°/mn).

TABLEAU 2

| SOLUTION DURCISSEUR | | | REACTIVITE RESINE | | | |
|---|---|---|---|---|---|---|
| Di-méthyl para-toluidine % en poids par rapport au poids de la résine | Hydropéroxyde de cumène (% en poids par rapport au poids de la résine) | Produit réaction pento-xide vanadium + monobutyl phosphite (p.p.m.) vanadium | Temps de gel (en mn) | Temps de pic (en mn) | Temps de pic (°C) | Ecart gel-pic (en mn) |
| 0,5 | 1,05 | 10 | 0,5 | 1,3 | 160 | 0,8 |
| 0,1 | 1,05 | 10 | 0,4 | 1,3 | 166 | 0,9 |

TABLEAU 2 (SUITE)

| SOLUTION DURCISSEUR | | | PIC EXOTHERMIQUE DE POLYMERISATION | | | |
|---|---|---|---|---|---|---|
| Di-méthyl para-toluidine % en poids par rapport au poids de la résine | Hydropéroxyde de cumène % en poids par rapport au poids de la résine | Produit réaction pentoxide vanadium + monobutyl phosphite (p.p.m. vanadium) | T° début | T° maxi | T° fin pic | T° fin de polymérisation |
| 0,5 | 1,4 | 10 | < 20°C | 44°C | 59°C | 115°C |

La quantité résiduelle de monomère dans la résine durcie est de 0,5 % dans le premier essai et de 0,6 % dans le second essai.

EXEMPLE 6

A titre de comparaison l'exemple 1 est répété en utilisant uniquement 1,5 % de péroxyde de benzoyle et 0,5 % de-méthyl para-toluidine. Des difficultés apparaissent lors de la mise en oeuvre qui se manifestent par une non-homogénéité du mélange. Les caractéristiques obtenues sont le suivantes :

<u>à 40°C</u>                                                    <u>en DSC</u>

                                                      Pic exothermique de

                                                         polymérisation

- Temps de gel (minutes)  :  0,6        T° début      :    20°C
- Temps de pic (minutes)  :  1,5        T° maxi       :    34°C
- Temps de pic (°C)       :140          T° fin pic    :    58°C
- Ecart gel-pic (minutes) :  0,9        T° fin polym. :   105
- % monomère résiduel     :  2,5

EXEMPLE 7

On utilise la résine fabriquée selon l'exemple 3. On met en oeuvre un système catalytique constitué de :
- 1,05 d'hydropéroxyde de cumène liquide,
- 0,2 % de di-méthyl para-toluidine,
- 10 p.p.m. de vanadium métal du produit de la réaction pentoxyde de vanadium + monobutyl phosphite.

A titre de comparaison on met en oeuvre un sytème catalytique constitué de 1,5 % de péroxyde de benzoyle en émulsion et 0,5 % de diméthyl para-toluidine. Toutes les quantités sont exprimées en % en poids par rapport au poids de la résine.

Le tableau 3 suivant résume les résultats à une température de mise en oeuvre de 40°C.

TABLEAU 3

| DURCISSEUR UTILISE | SOLUTION DE DURCISSEUR SELON L'INVENTION | ESSAI COMPARATIF |
|---|---|---|
| Temps de gel (minutes) | 0,4 | 0,4 |
| Temps de pic (minutes) | 1,4 | 1,1 |
| Température de pic (°C) | 165 | 170 |
| Ecart gel—pic (minutes) | 1 | 0,7 |
| Moulage 40°C sans postcuisson Durée BARCOL (15 minutes après démoulage) | 40-45 | 45-50 |
| Dureté BARCOL (24 heures après démoulage) | 50-55 | 50-55 |
| % monomère résiduel | 0,1 | 2,5 |
| Moulage réduit 1 heure à 90°C Dureté BARCOL | 50-55 | |
| % MAM résiduel | < 0,01 | 2,5 |

EXEMPLE 8

La réactivité à 40°C de la résine de l'exemple 3 est déterminée en ajoutant à la résine 100 parties d'une charge minérale constituée de carbonate de calcium et en mettant en oeuvre divers systèmes catalytiques.

Le tableau 4 suivant résume les résultats obtenus :

TABLEAU 4

| Système catalytique : les quantités sont en % en poids par rapport au poids de la résine | Temps gel (mn) | Temps pic (mn) | Tempé-rature pic (°C) | Ecart gel-pic (mn) |
|---|---|---|---|---|
| Hydropéroxyde de cumène liquide : 1,05 Di-méthyl para-toluidine : 0,7 Produit de la réaction pentoxyde de vanadium + mono-butyl phosphite 14 p.p.m. vanadium métal | 1,4 | 2,4 | 150 | 1 |
| Hydropéroxyde de cumène : 1,05 Di-méthyl para-toluidine : 0,5 Octoate de cobalt : 300 p.p.m. cobalt métal | 1,2 | 2,2 | 140 | 1 |

0 273 795

TABLEAU 4 (suite)

| Système catalytique : les quantités sont en % en poids par rapport au poids de la résine | Temps gel (mn) | Temps pic (mn) | Tempé-rature pic (°C) | Ecart gel-pic (mn) |
|---|---|---|---|---|
| Péroxyde de méthyl-éthyl cétone : 1 Di-méthyl para-toluidine : 0,5 Octoate de cobalt : 300 p.p.m. cobalt métal | 1,1 | 2 | 122 | 0,9 |
| Péroxyde d'éthyl-2 Hexanoate de t-butyle : 1,2 Di-méthyl para-toluidine : 0,5 Octoate de cobalt : 300 p.p.m. cobalt métal Acétyl-acétone : 0,3 | 0,75 | 1,5 | 148 | 0,75 |

EXEMPLE 9

Dans un réacteur muni d'un agitateur, d'un thermomètre, d'un dispositif de distillation sous vide, d'une ampoule d'introduction de réactifs et d'un appareillage de chauffage, on introduit 65 parties de solvant constitué de méthylisobutylcétone. On chauffe le solvant à 100°C. Dans l'ampoule d'introduction de réactifs, on charge un mélange constitué par 18,6 parties de dodécylmercaptan utilisé comme agent de transfert de chaîne, 34,5 parties de méthacrylate de méthyle, 46,9 parties de méthacrylate de glycidyle et 3 parties d'azobisisobutyronitrile utilisés comme catalyseur. Les réactifs sont coulés en maintient ensuite le milieu réactionnel 1 heure supplémentaire à cette température.

Après évaporation du solvant, on obtient 103 parties de copolymère glycidylé auquel on ajoute 100 ppm d'hydroquinone.

On charge ensuite dans l'ampoule d'introduction 23,8 parties d'acide acrylique contenant 0.126 partie de diisopropylsalycilate de chrome qui sont ensuite coulés en 1 heure dans le copolymère maintenu à 105°C. Après 5 heures de réaction, on obtient une résine dont la masse moléculaire Mn est de 2200 ; l'indice d'acide de 14,5 et l'indice d'époxyde de 0,126.

Elle est ensuite mise en solution dans du méthacrylate de méthyle à raison d'une quantité égale à 43 % en poids et la résine ainsi obtenue présente les caractéristiques suivantes :

Extrait sec (%).................... 57
Viscosité à 20°C (Pas)............. 0,13
Temps de gel (minutes)............. 0,6
Température de pic (minutes)........... 2,3
Température de pic (°C)............ 198
Ecart gel-pic (minutes)............ 1,7

Le réactivité est déterminée selon le mode opératoire décrit dans l'exemple 5 : sur la résine accélérée par 0,2 % de diméthylparatoluidine et 10 ppm en vanadium métal du produit de la réaction du pentoxyde de

13

**0 273 795**

vanadium avec le monobutylphosphite et catalysée par 1,05 % d'hydroperoxyde de cumène pur.

EXEMPLE 10

On fait réagir, avec le copolymère glycidylé (contenant 100 ppm d'hydroquinone) obtenue dans l'exemple 9 : 28,4 parties d'acide méthacrylique contenant 0,131 partie de diisopropylsalycilate de chrome -au lieu de l'acide acrylique- qui sont coulés en 1 H 30 mn en maintenant la température à 105°C. Au bout de 3 H 30 de réaction, on obtient une résine dont la viscosité masse à 100°C est de 1,6 Pas, l'indice d'acide de 11,3 et l'indice d'époxyde de 0,0063. La viscosité à 20°C en solution à 52,7 % d'extrait sec en poids dans le méthacrylate de méthyle est de 0,13 Pas et la réactivité, déterminée comme dans l'exemple 5, est la suivante :

Temps de gel (minutes)............. 0,4
Temps de pic (minutes)............. 1,25
Température de pic (°C)............ 168
Ecart gel-pic (minutes)............ 0,85

Le HDT (norme NFT 51.005) et la température de transition vitreuse (DSC2 de Perkin Elmer) de la résine pure polymérisée sont respectivement de 71°C et de 103°C.

**Revendications**

1 - Nouvelles compositions de résines acryliques susceptibles d'être durcies à l'aide de catalyseurs solides ou en émulsion caractérisées en ce que ces résines sont obtenues par réaction de copolymères carboxylés ou époxydés sur soit du méthacrylate de glycidyle lorsque le copolymère est carboxylé, soit de l'acide méthacrylique lorsque le copolymère est époxydé, la résine insaturée ainsi obtenue étant mise en solution dans un diluant réactif, les copolymères carboxylés ou époxydés étant obtenus par voie radicalaire en faisant réagir, pour obtenir le copolymère carboxylé, de l'acide méthacrylique, des monomères (méth)acryliques dépourvus de groupes réactifs choisis parmi les (méth)acrylates d'acoyle, des agents de transfert de chaîne et un initiateur azoïque ou peroxydé, et en faisant réagir, pour obtenir le copolymère époxydé, du méthacrylate de glycidyle, des monomères (méth)acryliques dépourvus de groupes réactifs choisis parmi les (méth)acrylates d'alcoyle, des agents de transfert de chaîne, et un initiateur azoïque ou un proxyde.

2. Compositions selon 1, caractérisées en ce que les copolymères carboxylés et époxydés sont mis à réagir avec du (méth)acrylate de glycide ou de l'acide (méth)acrylique utilisés en quantité stoechiométrique calculées sur le nombre de fonctions carboxyle ou époxyde.

3. Compositions selon 1 et 2, caractérisées en ce que la résine insaturée est mise en solution dans un diluant réactif choisi parmi un (méth)acrylate d'alcoyle utilisé en quantité comprise entre 10 et 90 % en poids et de préférence entre 30 et 70 % en poids par rapport au poids de la résine insaturée.

4. Compositions selon 1 à 3, caractérisées en ce qu'on ajoute avec le diluant réactif d'autres monomères choisis parmi le styrène, l'acétate de vinyle ou d'autres monomères polyfunctionnels acryliques, comme par exemple le di(méth)acrylate d'éthylène glycol, le triacrylate de triméthylolpropane, ou des diacrylates de glycidyléther du bisphénol A.

5. Compositions selon 1 à 4, caractérisées en ce que le copolymère carboxylé est obtenu en faisant réagir par voie radicalaire 5 à 40 % en poids d'acide (méth)acrylique, 4 à 92 % en poids de monomères acryliques dépourvus de groupes réactifs choisis parmi les (méth)acrylates d'alcoyle, 2 à 50 % en poids d'agent de transfert de chaîne et 1 à 5 % en poids d'initiateur azoïque ou peroxyde.

6. Compositions selon 1 à 5, caractérisées en ce que le copolymère époxydé est obtenu en faisant réagir 10 à 50 % en poids de (méth)acrylate de glycide 10 à 87 % en poids de monomères acryliques dépourvus de groupes réactifs, 2 à 40 % en poids d'agent de transfert de chaîne et 1 à 5 % en poids d'initiateur azoïque ou péroxydé.

7. Compositions selon 1 à 6, caractérisées en ce que les monomères acryliques dépourvus de groupes réactifs sont choisis parmi les monomères alcoylés tels que l'acrylate de méthyl, de butyl, d'éthyl-hexyl et les méthacrylates correspondants.

8. Compositions selon 1 à 7, caractérisées en ce que les agents de transfert de chaîne sont choisis parmi l'éthyl, le tertiononyl ou le n-octyl mercaptan, le n-dodécyl mercaptan, l'acide thioglycolique, le mercapto-éthanol, le méthyl mercaptan, le di-ester de l'éthylène glycol et de l'acide thioglycolique.

9. Procédé de durcissement des résines acryliques selon 1 à 8 caractérisé en ce que le durcissement est réalisé à l'aide d'un système catalylique constitué d'un péroxyde organique liquide, d'une amine aromatique et d'au moins un accélérateur.

10. Procédé selon 9 caractérisé en ce que le péroxyde organique est choisi parmi l'hydorpéroxyde de cumène, l'hydropéroxyde de tertio-butyle, l'hydropéroxyde de diiopropyl benzène, les péroxydes de cétone aliphatiques ou cycloaliphatiques ou des peresters tel que péroxyde d'éthyl-2-hexanoate.

11. Procédé selon 9 et 10, caractérisé en ce que l'amine aromatique est choisie parmi la di-méthyl paratoluidine, la di-méthyl aniline, la di-éthyl aniline.

12. Procédé selon 9 à 11, caractérisé en ce que l'accélérateur est choisi parmi l'octoae de cobalt, le naphténate de cobalt, l'éthyl-2 hexanoate de cobalt ou le produit de la réaction du pentoxyde de

14

vanadium avec le monobutyl phosphite ou l'acéthyl-acétone.